# EUROPEAN PATENT SPECIFICATION

(11) **EP 2 927 195 B1**
(45) Date of publication and mention of the grant of the patent: **28.02.2018**
(21) Application number: 13859233.2
(22) Date of filing: 22.11.2013
(51) Int. Cl.: C02F 1/52, C02F 1/20, C02F 1/48, C02F 1/56, C02F 101/32, C02F 103/36

(54) **SEPARATION DEVICE AND SEPARATION METHOD**
TRENNVORRICHTUNG UND TRENNVERFAHREN
APPAREIL DE SÉPARATION ET MÉTHODE DE SÉPARATION

(30) Priority: 28.11.2012 JP 2012259432
(43) Date of publication of application: 07.10.2015
(73) Proprietor: Japan Oil, Gas and Metals National Corporation, Minato-ku, Tokyo 105-0001 (JP); Hitachi, Ltd., Tokyo 100-8280 (JP)
(72) Inventor: KAWAMURA, Kazuyuki, Tokyo 105-0001 (JP); SEKINO, Hiroyuki, Tokyo 105-0001 (JP); KUNISHI, Yosuke, Tokyo 105-0001 (JP); ISOGAMI, Hisashi, Tokyo 100-8280 (JP)
(74) Representative: Plougmann Vingtoft a/s
(86) International application number: PCT/JP2013/081468
(87) International publication number: WO 2014/084128

(56) References cited:
- JP-A- 2012 040 536
- JP-A- 2012 061 459
- JP-A- 2012 503 724
- US-A- 3 803 033
- US-A1- 2010 155 327
- US-A1- 2011 036 771

## Description

### [Technical Field]

The present invention relates to a separation apparatus and a separation method for separating oil contained in water to be treated.

### [Background of the Invention]

Conventionally, a method of adding and stirring inorganic flocculants of multi-charged ions of aluminum or the like and powdery magnetic materials into the water to be treated so as to separate and remove the undesired substances (e.g. emulsified and remaining oil and suspended solids) contained in the water to be treated is known. According to this method, oil to be removed that is contained in the water to be treated is flocculated with the magnetic materials, and aggregates (hereinafter, flocs) having magnetism are formed, and so the substances to be removed can be separated from the water to be treated by collecting the flocs by using a drum having a built-in magnet. (for example, see Patent Document 1 and Patent Document 2)

### [Prior Art]

### [Patent Document]

Patent Document 1: Japanese Unexamined Patent Application Publication No. 2012-040536
Patent Document 2: Japanese Unexamined Patent Application Publication No. 2012-61459

### [Summary of Invention]

### [Problems to be solved by the Invention]

However, when oil is removed from the water to be treated that contains oil field produced water generated together with crude oil produced in an oil field, it has been necessary to conduct a strict concentration control of volatile components or to use explosion-proof equipment to prevent an explosion due to the volatile components contained in the oil field produced water. As a result, a separation apparatus for separating the oil from the water to be treated required a high cost to prevent the explosion.

Further, when the separation apparatus is used in an offshore oil field, there has also been a problem that the oil to be removed that is separated from the oil field produced water had to be transported to a treatment facility on a land by using a transportation ship. It required a significant cost to transport the oil to be removed generated in the offshore oil field far from the land by sea.

The present invention is created in view of the aforementioned circumstances and is to provide the separation apparatus which has a lower risk of an explosion and can treat the oil to be removed at a lower cost.

### [Means for solving the problems]

In order to solve the above mentioned problem, in a first aspect of the present invention, a separation apparatus according to claim 1 is presented. According to the above separation apparatus, because the oil to be removed can be separated in a condition where oxygen in the separation section is removed, an explosion can be prevented.

The separation section includes a storage section that stores flocculants for flocculating the substances to be removed contained in the water to be treated, a flocculating section that forms aggregates containing flocculated oil to be removed by stirring together the flocculants and the water to be treated, and a collecting section that collects and sends the aggregates to the substance-to-be-removed discharging section. Because the separation section can form the aggregates under an environment where oxygen is removed, the aggregates which are sent to the substance-to-be-removed discharging section can be prevented from being exposed to oxygen in the

The separation apparatus further comprises a return section that returns at least a part of the treated water to the storage section in an anoxic state, wherein the storage section may dissolve the flocculants in the treated water returned by the return section. By dissolving the flocculants by using the treated water returned in the anoxic state, the oxygen can be prevented from entering into the separation section and the treated water can effectively be utilized.

The acquiring section acquires oil field produced water produced with crude oil as the water to be treated, and the substance-to-be-removed discharging section may discharge the substances to be removed to a pipe line which transfers the crude oil. Because the oil is not exposed to the oxygen, the oil can be efficiently transported to a production facility on a land by using the pipe line without corroding the pipe line.

The oxygen removing section removes the oxygen by supplying, for example, an inert gas into the separation section. Because the inert gas is supplied into the separation section, inside of the separation section can be put in a stable state where chemical reaction is hard to occur.

In the second aspect of the present invention, a separation method is presented in claim 3. According to the above separation method, because the oil can be separated in a condition where oxygen in the separation section is removed, an explosion can be prevented.

### [Effects of the Invention]

According to the above-mentioned exemplary embodiments, oil and suspended solids can be removed from the water to be treated without using high-cost explosion-proof equipment. Further, because the processes are performed without being exposed to oxygen in the air in the process of separating the oil from the water to be treated, the oil removed can be processed at a lower cost by discharging the substances to be removed to the pipe line while the substances to be removed express no corrosiveness. Furthermore, because the treated water remaining after the oil is separated from the water to be treated also contains no oxygen, the treated water can be reused for dissolving the flocculants for separating the oil.

### [Brief Description of the Drawings]

FIG. 1 shows a configuration example of a separation apparatus according to the first exemplary embodiment.
FIG. 2 shows the configuration example of the separation apparatus according to the second exemplary embodiment.
FIG. 3 shows a configuration example of the structure around a storage section and a flocculating section according to the third exemplary embodiment.

### [Description of Embodiments]

### <The First Exemplary Embodiment>

### [Configuration Example of Separation Apparatus 100]

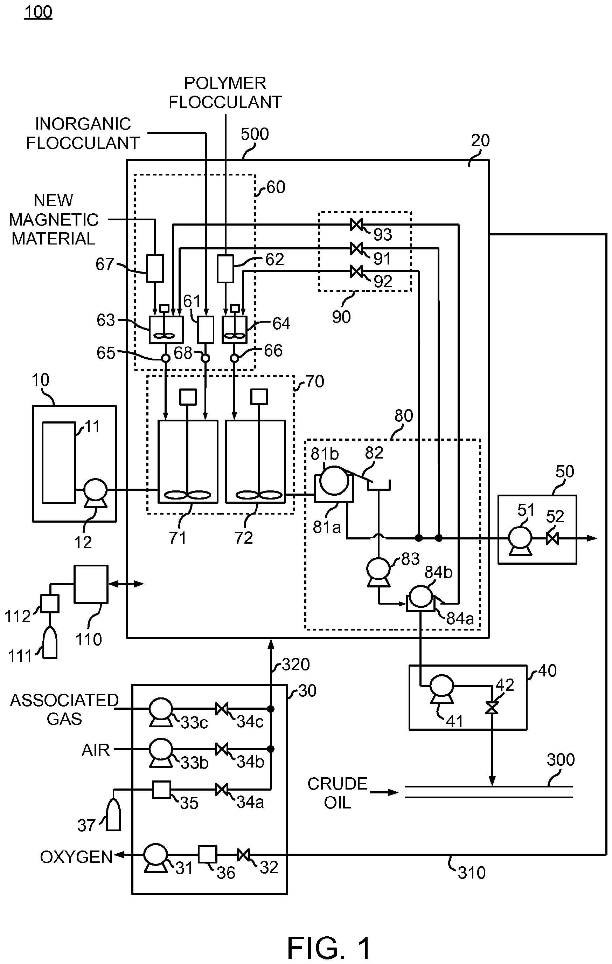

FIG. 1 shows a configuration example of a separation apparatus 100 according to the first exemplary embodiment. The separation apparatus 100 includes an acquiring section 10, a separation section 20, an oxygen removing section 30, a substance-to-be-removed discharging section 40, and a treated-water discharging section 50, and separates substances to be removed such as oil and suspended solids contained in water to be treated. The separation apparatus 100 further includes a control board 110. Wiring of various types of sensors and electromagnetic valves are drawn to the outside of a closed container 500 and connected with the control board 110 while the closed container 500 is maintained in a sealed state. The control board 110 is controlled by a control apparatus such as an externally connected computer.

The acquiring section 10 acquires oil field produced water that contains substances to be removed, i.e. oil. The acquiring section 10 acquires the oil field produced water remaining after associated gas and crude oil are removed from a fluid produced in an oil well by using a separator (not shown in the figure). The acquiring section 10 includes, for example, a water-to-be-treated tank 11 for storing the acquired water to be treated and a water feeding pump 12. The acquiring section 10 feeds the water to be treated stored in the water-to-be-treated tank 11 into the separation section 20 by using the water feeding pump 12.

The separation section 20 includes a storage section 60, a flocculating section 70, a collecting section 80, and a return section 90 in its enclosed housing and separates the substances to be removed from the water to be treated containing the substances to be removed. First, the water to be treated that is fed from the acquiring section 10 is stirred with flocculants and magnetic materials input from the storage section 60 in the flocculating section 70. The flocculating section 70 forms flocs having magnetism by stirring together the water to be treated, the flocculants, and the magnetic materials. The flocs formed in the flocculating section 70 are collected in the collecting section 80 and are sent to the substance-to-be-removed discharging section 40. By the procedures described above, the separation section 20 can separate the substances to be removed from the water to be treated. A detailed configuration of the separation section 20 is described later.

The oxygen removing section 30 is connected with an exhaust pipe 310 and a supply pipe 320 communicating with the inside of the closed container 500 which encloses the separation section 20. The oxygen removing section 30 includes an exhaust pump 31, an exhaust valve 32, a supply pump 33b, a supply pump 33c, a supply valve 34a, a supply valve 34b, a supply valve 34c, a regulator 35, and a gas concentration sensor 36.

The oxygen removing section 30 expels gas in the closed container 500 through the exhaust pipe 310 while supplying gas through the supply pipe 320. The oxygen removing section 30 removes oxygen that has entered into the separation section 20 by being attached to the flocculants and the magnetic materials put into the storage section 60 from the outside. At this time, the oxygen removing section 30 can efficiently reduce the oxygen gas concentration in the closed container 500 by absorbing the oxygen with the provided exhaust pump 31 as needed. The oxygen removing section 30 preferably removes the oxygen until the oxygen concentration in the closed container 500 becomes 50 ppb or less, and more preferably removes the oxygen until the oxygen concentration becomes 10 ppb or less.

In order to remove the oxygen from the closed container 500, the oxygen removing section 30 supplies the closed container 500 with an inert oil-field-associated gas through the regulator 35 and the supply valve 34a. Further, during maintenance or the like, the oxygen removing section 30 may exchange the inert gas in the container with air by supplying the closed container 500 with the air pressurized in the supply pump 33b through the supply valve 34b. After the oxygen removing section 30 pressurizes the associated gas separated by the separator by using the supply pump 33c, the oxygen removing section 30 may supply the closed container 500 with the associated gas through the supply valve 34c.

The oxygen removing section 30 preferably puts the separation section 20 in a positive pressure state, where gas pressure in the separation section 20 is higher than the gas pressure of the outside of the separation section 20, by filling the separation section 20 with the inert gas. For example, the gas pressure in the separation section 20 is preferred to be 2 Pa or more and 50 Pa or less, and is more preferred to be 5 Pa or more and 10 Pa or less. Inflow of the oxygen from the outside can be prevented by making the inside of the separation section 20 to be in the positive pressure state.

In order to remove the oxygen efficiently, the exhaust pipe 310 and the supply pipe 320 are preferably placed at positions separated from each other as much as possible in the closed container 500. For example, the exhaust pipe 310 and the supply pipe 320 are preferably respectively placed around the two most distantly positioned corners of the closed container 500. The separation apparatus 100 may have a stirring section (not shown in the figure) with a fan for stirring the gas in the closed container 500. Because the separation apparatus 100 has the stirring section, the exhaust pipe 310 and the supply pipe 320 can be close to each other and a plurality of gases with different specific gravities can also be supplied as anoxic gases.

Procedures for removing the oxygen from the separation section 20 are described below. First, prior to an operation of the separation apparatus 100, power supplies for various types of sensors and electromagnetic valves which are non-explosion-proof in the separation apparatus 100 are shut off by the control board 110. Then, after the closed container 500 is put in an enclosed state, the exhaust valve 32 is opened and the supply valve 34a, the supply valve 34b, and the supply valve 34c are closed, and the gas in the closed container 500 is stirred by the fan of the stirring section. Subsequently, the air containing oxygen in the closed container 500 is exchanged with nitrogen by opening the supply valve 34a and feeding the nitrogen into the closed container 500 from the high pressure cylinder 37. By starting power feeding to the various types of sensors and electromagnetic valves after the air in the closed container 500 is exchanged with the nitrogen, an explosion can be prevented even if the various types of sensors and electromagnetic valves are not explosion-proof.

And then, by introducing the associated gas into the closed container 500 by closing the supply valve 34a and by opening the supply valve 34c at the time when the oxygen concentration measured by the gas concentration sensor 36 provided at the subsequent stage of the exhaust valve 32 becomes less than 1 %, the nitrogen in the closed container 500 is exchanged with the associated gas. The completion of exchanging for the associated gas can be detected by using the gas concentration sensor 36 but the exchange may be simply judged to be completed when a predetermined amount of the associated gas (for example, 10 times the capacity of the closed container 500) is supplied.

Subsequently, the separation section 20 can be kept in an anoxic state by keeping the pressure in the closed container 500 higher than the outside gas pressure by closing the exhaust valve 32. According to the above-mentioned method, because the separation section 20 can be operated in the associated gas atmosphere, the flocs can be collected under an environment similar to the underground, and expression of the corrosiveness can be more surely prevented.

Further, in order to prevent corrosion of conductive sections such as connection terminals of wirings, it is preferred to keep the gas pressure in the control board 110 higher than the outside gas pressure by supplying the control board 110 in the enclosed state either with air that does not contain corrosive components and combustible components or inert gases such as nitrogen or carbon dioxide stored in a high pressure cylinder 111 through the regulator 112.

The substance-to-be-removed discharging section 40 includes a discharging pump 41 and a discharging valve 42 and discharges the substances to be removed separated in the separation section 20 to the outside. The substance-to-be-removed discharging section 40 discharges the substances to be removed to a pipe line 300 which transfers the crude oil produced with the oil field produced water contained in the water to be treated. Because the substances to be removed are separated from the water to be treated in the separation section 20 where oxygen is removed, the substances to be removed are not exposed to oxygen gas. Therefore, the pipe line 300 does not corrode even if the substances to be removed enter the pipe line 300.

The treated-water discharging section 50 includes a discharging pump 51 and a discharging valve 52 and discharges the treated water remaining after the substances to be removed are separated in the separation section 20 to the outside. For example, when the separation apparatus 100 is at sea, the treated-water discharging section 50 discharges the treated-water to the sea. The treated-water discharging section 50 may discharge the treated water to a mobile body such as a vessel that transports the treated water. The treated-water discharging section 50 preferably further includes a trap for preventing the treated water from flowing backward.

As described above, the separated substances to be removed and the treated water do not contain the oxygen because the substances to be removed and the treated water are separated from the water to be treated under the condition where the oxygen is removed in the separation section 20 by removing the oxygen from the inside of the separation section 20 by using the oxygen removing section 30. Therefore, because there is no risk of an explosion even if the water to be treated which is to be separated in the separation section 20 contains volatile oil, the cost for the explosion-proof equipment can be reduced and various sensors and the like which are not explosion-proof can be used for controlling the facility. Further, because oxygen is not coupled with the substances to be removed, the pipe line 300 does not corrode even if the substance-to-be-removed discharging section 40 discharges the substances to be removed to the pipe line 300.

### [Configuration Example of Separation Section 20]

A detailed configuration of the separation section 20 and detailed procedures for separating the substances to be removed are described below.

The storage section 60 includes a tank for storing the flocculants for flocculating the substances to be removed contained in the water to be treated and the magnetic materials. In the example shown in FIG. 1, the storage section 60 includes an inorganic flocculant tank 61, a polymer flocculant tank 62, a magnetic material stirring tank 63, a polymer flocculant stirring tank 64, a pump 65, a pump 66, a pump 68, and a new magnetic material tank 67.

The inorganic flocculant tank 61 stores inorganic flocculants, for example, poly-aluminum chloride (PAC), ferric sulfate, ferric chloride, aluminum sulfate and the like. The polymer flocculant tank 62 stores, for example, anionic flocculants such as polyacrylamide. Powdery polymer flocculants stored in the polymer flocculant tank 62 are put into a second flocculating unit 72 in the flocculating section 70 by using, for example, the pump 66 after being dissolved into water containing no oxygen in the polymer flocculant stirring tank 64, and are stirred with the water to be treated. When the inorganic flocculants are supplied in a liquid state, the flocculants are put into a first flocculating unit 71 in the flocculating section 70 by using the pump 68 after being weighed with a measuring means (not shown in the figure) in their present state and are stirred with the water to be treated. Further, if the inorganic flocculants are powdery, the flocculants are stirred with the water to be treated introduced from the acquiring section 10 after being dissolved into the water containing no oxygen like the polymer flocculants.

The magnetic materials, which are normally powdery and typified by magnetite particles, are put into a system through a hopper (not shown in the figure), and are stored in the new magnetic material tank 67. The magnetic materials collected in the collecting section 80 after being used for removing the substances to be removed show various properties according to specifications of the collecting section 80, and when the materials are liquid, they are collected through a return valve 93. These magnetic materials are dispersed into the water containing no oxygen in the magnetic material stirring tank 63, and are stirred with the water to be treated and the inorganic flocculants in the first flocculating unit 71. The water containing no oxygen may be introduced from the outside of the closed container 500 but the treated water can be recycled in the closed container.

The flocculating section 70 includes the first flocculating unit 71 and the second flocculating unit 72, and forms the flocs which are aggregates of the substances to be removed contained in the water to be treated by stirring the flocculants put from the storage section 60 and the water to be treated introduced from the acquiring section 10. Specifically, in the first flocculating unit 71, the water to be treated is introduced from the acquiring section 10 and the inorganic flocculants and the magnetic materials are also input respectively from the inorganic flocculant tank 61 and the magnetic material stirring tank 63, and then they are stirred. Because the water to be treated, the inorganic flocculants, and the magnetic materials are stirred in the first flocculating unit 71, surface charges of the substances to be removed whose surfaces are negatively charged are neutralized, the flocculants containing the magnetic materials and the substances to be removed are flocculated, and the flocs having magnetism are formed.

Primary treated water that contains the flocs created in the first flocculating unit 71 is sent to the second flocculating unit 72. The polymer flocculants are put into the second flocculating unit 72 from the polymer flocculant stirring tank 64. The polymer flocculants that were input are stirred with the primary treated-water introduced from the first flocculating unit 71. Collected magnetic materials may be put into the second flocculating unit 72.

The amount of the polymer flocculants input from the polymer flocculant stirring tank 64 is decided according to the amount of the inorganic flocculants and the collected magnetic materials put into the first flocculating unit 71. For example, a computer monitors the amount of the inorganic flocculants and the collected magnetic materials that were put into the first flocculating unit 71, and controls the pump 66 which inputs the polymer flocculants according to the value acquired by the monitoring.

In the second flocculating unit 72, by stirring the water slower than the stirring speed of the first flocculating unit 71, the magnetic flocs contained in the primary treated water from the first flocculating unit 71 grow, and secondary treated water that contains larger magnetic flocs is generated. The second flocculating unit 72 may include a plurality of tanks and may form larger magnetic flocs by performing the flocculating processes a plurality of times.

The collecting section 80 includes a magnetic separation unit 81, a scraper 82, a floc transferring pump 83, and a magnetic material collecting unit 84.
The collecting section 80 collects the magnetic flocs with a collector having magnetism and transfers the flocs to the substance-to-be-removed discharging section 40.

The magnetic separation unit 81 includes a magnetic separation tank 81a and a magnetic drum 81b. The secondary treated water containing the magnetic flocs created in the second flocculating unit 72 is poured into the magnetic separation tank 81a. The magnetic drum 81b has a built-in magnet and at least a part of the magnet is immersed in the secondary treated water in the magnetic separation tank 81a. When the secondary treated water contacts with the magnetic drum 81b, the magnetic materials contained in the flocs in the secondary treated water are attracted to the magnetic drum 81b by the magnetic force of the magnet.

The scraper 82 scrapes the magnetic flocs discharged to the outside of the magnetic separation tank 81a during the rotation of the magnetic drum 81b. The scraper 82 is a plate made of rubber, for example, and at least a part of it contacts a surface of the magnetic drum 81b.

The floc transferring pump 83 delivers the flocs to a magnetic material collecting unit 84 by accelerating the magnetic flocs scraped by the scraper 82. The magnetic material collecting unit 84 includes (i) a magnetic material collecting tank 84a into which the magnetic flocs are delivered through the floc transferring pump 83 and (ii) a magnetic drum 84b which rotates in the magnetic material collecting tank 84a and has a built-in permanent magnet. The flocs sent to the magnetic material collecting tank 84a through the floc transferring pump 83 are decomposed by a shearing force generated by passing through the periphery of the magnetic drum 84b while being accelerated by the floc transferring pump 83.

Out of the decomposed flocs, the flocs with magnetic forces necessary for the flocculating in the flocculating section 70 are collected by the magnetic drum 84b and are sent to the magnetic material stirring tank 63 through the return section 90. For example, the magnetic material collecting unit 84 sorts out the flocs with the magnetic force stronger than a predetermined strength and sends the flocs to the return section 90. Out of the decomposed flocs, the flocs which were not collected by the magnetic drum 84b are sent to the substance-to-be-removed discharging section 40 as sludge. The magnetic drum 84b preferably has a magnet whose magnetic force is stronger than the magnetic force of the magnetic drum 81b so as to send the flocs with sufficient magnetic forces to the magnetic material stirring tank 63.

The collecting section 80 sends a part of the secondary treated water from which the magnetic flocs were removed to the storage section 60 through the return section 90, and sends the remaining secondary treated-water to the treated-water discharging section 50. The collecting section 80 sends an amount of the secondary treated water determined according to, for example, the amount of water necessary for dissolving the flocculants in the storage section 60 to the return section 90. The collecting section 80 may send the secondary treated water to the return section 90 when the water quality of the secondary treated water satisfies a water quality condition required for dissolving the flocculants in the storage section 60 or for flocculating in the flocculating section 70.

The return section 90 returns at least a part of the secondary treated water from which the magnetic flocs were removed to the storage section 60 in an anoxic state through the return valve 91 and the return valve 92, and sends it to the magnetic material stirring tank 63 and the polymer flocculant stirring tank 64. The return section 90 controls the amount of the secondary treated water to be returned to the storage section 60 according to, for example, any of the amount of the inorganic flocculants stored in the new magnetic material tank 67 and the amount of the polymer flocculants stored in the polymer flocculant tank 62.

Further, the return section 90 sends the flocs containing the magnetic materials collected by the magnetic material collecting unit 84 to the magnetic material stirring tank 63 through the return valve 93. The return section 90 controls the amount of the flocs returned to the storage section 60 according to, for example, the amount of the new magnetic materials stored in the new magnetic material tank 67.

Because the oxygen concentration in the separation section 20 is lower than a predetermined value, the secondary treated water is not exposed to the oxygen before the secondary treated water is poured into the inorganic flocculant tank 61 and the polymer flocculant tank 62 through the return section 90. Therefore, no oxygen gets into the flocculating section 70 even when the secondary treated water is used in the storage section 60. Similarly, because the collected magnetic materials sent to the magnetic material stirring tank 63 by the return section 90 contains no oxygen, no oxygen gets into the flocculating section 70 even when the collected magnetic materials are put into the flocculating section 70.

### [Controls by a Computer]

Further, the separation apparatus 100 may include a control means such as a computer and a sequencer for controlling the acquiring section 10, the separation section 20, the oxygen removing section 30, the substance-to-be-removed discharging section 40, and the treated-water discharging section 50. For example, by executing a program stored in a storage media, the computer can execute processes for acquiring the water to be treated containing the substances to be removed, separating the substances to be removed from the water to be treated, removing the oxygen from the separation section 20, discharging the substances to be removed separated in the separation section 20, and discharging the treated water remaining after the substances to be removed are separated from the water to be treated.

As described above, in the separation apparatus 100 according to the first exemplary embodiment, an explosion in the separation section 20 can be prevented because oxygen is removed from the separation section 20 where the substances to be removed are separated from the water to be treated. Further, the treated water can be reused as water for dissolving the flocculants because no oxygen is contained in the treated-water separated from the water to be treated in the separation section 20. Furthermore, the substances to be removed can be discharged by using the pipe line 300 because there is also no oxygen contained in the substances to be removed.

### <The Second Exemplary Embodiment> (not according to the invention)

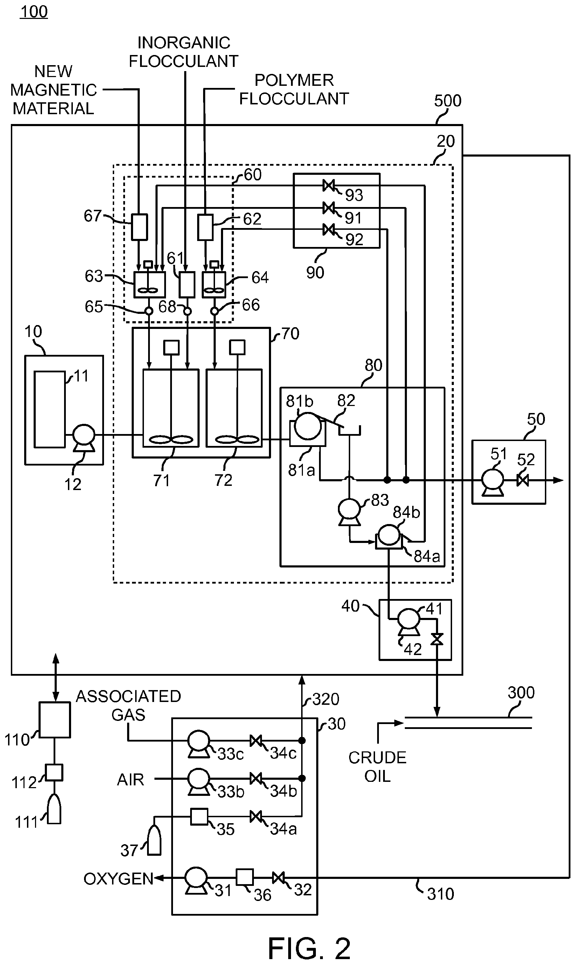

FIG. 2 shows the configuration example of the separation apparatus 100 according to the second exemplary embodiment. In the separation apparatus 100 according to the first exemplary embodiment, the separation section 20 is enclosed, and the oxygen removing section 30 removes the oxygen only from the separation section 20. On the other hand, in the separation apparatus 100 shown in FIG. 2, a housing including the acquiring section 10, the separation section 20, and the substance-to-be-removed discharging section 40 are enclosed, and the oxygen removing section 30 removes the oxygen from the enclosed space including the acquiring section 10, the separation section 20, and the substance-to-be-removed discharging section 40.

As is the case with the first exemplary example, the acquiring section 10 acquires the oil field produced water containing the substances to be removed as the water to be treated. The acquiring section 10 includes the water-to-be-treated tank 11 that stores the oil field produced water remaining after the associated gas and the crude oil are removed from a fluid produced from the oil well with a separator (not shown in the figure) as the water to be treated and the water feeding pump 12. The acquiring section 10 feeds the water to be treated stored in the water-to-be-treated tank 11 into the separation section 20 with the water feeding pump 12.

Because the water to be treated before separating the substances to be removed is not exposed to oxygen by removing the oxygen from the enclosed space including the acquiring section 10 by using the oxygen removing section 30, inflow of oxygen to the separation section 20 can be prevented. Further, the substances to be removed that are combined with oxygen are prevented from entering the pipe line 300 because the substances to be removed are not exposed to oxygen until being sent to the pipe line 300 from being separated in the separation section 20 by removing the oxygen from the enclosed space including the substance-to-be-removed discharging section 40 by using the oxygen removing section 30..

### <The Third Exemplary Embodiment> (not according to the invention)

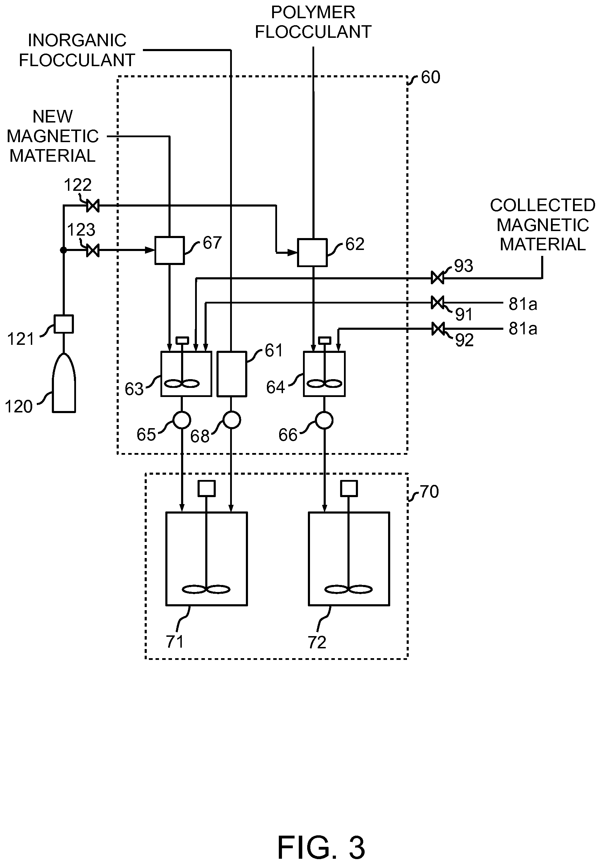

FIG. 3 shows a configuration example of the structure around a storage section 60 and a flocculating section 70 according to the third exemplary embodiment. The polymer flocculant tank 62 and the new magnetic material tank 67 in FIG. 3 are supplied with the inert gas from a high pressure cylinder 120 through a regulator 121, a valve 122 and a valve 123. By supplying the inert gas each time the new flocculants from the outside are put into the polymer flocculant tank 62 and the new magnetic material tank 67 and by removing the air containing oxygen that has entered into the tanks when the flocculants were input, oxygen can be prevented from entering into the separation section 20.

### <The Fourth Exemplary Embodiment> (not according to the invention)

In the separation apparatus 100 according to the above-mentioned exemplary embodiments, the new magnetic materials, the inorganic flocculants, and the collected magnetic materials are put into the first flocculating unit 71, and the polymer flocculants and the collected magnetic materials are put into the second flocculating unit 72. On the other hand, these flocculants and magnetic materials may be put into any of the first flocculating unit 71 and the second flocculating unit 72. For example, a computer may monitor the amount of the collected magnetic materials and put an amount of the new magnetic materials according to the amount of the collected magnetic materials into any of the first flocculating unit 71 and the second flocculating unit 72 by controlling the pumps.

### [Reference Numerals]

10 acquiring section,
11 water-to-be-treated tank,
12 water feeding pump,
20 separation section,
30 oxygen removing section,
31 exhaust pump,
32 exhaust valve,
33 supply pump,
34 supply valve,
35 regulator,
36 gas concentration sensor,
37 high pressure cylinder,
40 substance-to-be-removed discharging section,
41 discharging pump,
42 discharging valve,
50 treated-water discharging section,
51 discharging pump,
52 discharging valve,
60 storage section,
61 inorganic flocculant tank,
62 polymer flocculant tank,
63 magnetic material stirring tank,
64 polymer flocculant stirring tank,
65 pump,
66 pump,
67 new magnetic material tank,
70 flocculating section,
71 first flocculating unit,
72 second flocculating unit,
80 collecting section,
81 magnetic separation unit,
81a magnetic separation tank,
81b magnetic drum,
82 scraper,
83 floc transferring pump,
84 magnetic material collecting unit,
84a magnetic material collecting tank,
84b magnetic drum,
90 return section,
91 return valve,
92 return valve,
93 return valve,
100 separation apparatus,
110 control board,
111 high pressure cylinder,
112 regulator,
120 high pressure cylinder,
121 regulator,
122 valve,
123 valve,
300 pipe line

## Claims

1. A separation apparatus comprising:
a separator disposed in an oilfield, which separates water to be treated from crude oil produced in an oil well;
an acquiring section (10) being configured to acquire water to be treated containing oil field produced water that is produced associated with the crude oil produced in the oil well, the acquiring section acquiring the water to be treated from the separator;
a separation section (20) being configured to separate oil from the water to be treated, including:
a storage section (60) being configured to store flocculants for flocculating the oil contained in the water to be treated;
a flocculating section (70) being configured to form aggregates containing flocculated oil by stirring together the flocculants, magnetic materials, and the water to be treated;
a collecting section (80) being configured to collect and send the aggregates to the substance-to-be-removed discharging section by a collector having magnetism; and
wherein the separation section (20) includes a return section (90),
the return section (90) being configured to return at least a part of the treated water to the storage section (60) in an anoxic state, wherein
the storage section (60) being configured to dissolve the flocculants in the treated water returned by the return section (90),
a closed container (500) being configured to maintain at least the separation section (20) in a sealed state;
an oxygen removing section (30) being configured to remove oxygen in the separation section (20) including:
a supply pipe (320) communicating with inside of the closed container (500) and supplying the closed container with an anoxic oil-field-associated gas that is produced associated with the crude oil produced in the oil well, the supply pipe being connected to the separator, such that the anoxic oil-field-associated gas is supplied from the separator to the separation section of the closed container, and
an exhaust pipe (310) communicating to inside of the closed container (500), the exhaust pipe exhausting oxygen in the closed container (500);
a substance-to-be-removed discharging section (40) being configured to discharge the oil separated from the water to be treated; and
a treated-water discharging section (50) being configured to discharge the treated water remaining after the oil is separated from the water to be treated.

2. The separation apparatus according to claim 1, wherein
the substance-to-be-removed discharging section (40) being configured to discharge the aggregates to a pipe line which transfers the crude oil.

3. A separation method comprising:
in an oilfield, separating water to be treated from the crude oil produced in an oil well, the water containing oil field produced water that is produced associated with crude oil produced in the oil well;
via an acquiring section (10), acquiring the water to be treated containing oil field produced water that is produced associated with the crude oil produced in the oil well from the separator disposed in an oilfield, which separates water to be treated from crude oil produced in an oil well;
separating oil from the water to be treated in a separation section (20) enclosed by a closed container (500) that maintains at least the separation section (20) in a sealed state;
removing oxygen from the separation section including:
supplying oil-field-associated gas that is produced associated with crude oil produced in an oil well through the supply pipe (320) communicating to inside of the closed container (500) which encloses the separation section (20); and
discharging the oxygen in the closed container (500) through the exhaust pipe (310) communicating with inside of the closed container (500);
discharging the oil separated from the water to be treated; and
discharging the treated water remaining after the oil is separated from the water to be treated;
wherein the separating includes:
storing flocculants for flocculating the oil contained in the water to be treated;
forming aggregates that contain flocculated oil which is flocculated by stirring the flocculants, magnetic materials, and the water to be treated;
collecting the aggregates by a collector having magnetism and discharging the aggregates;
returning at least a part of the treated water to the storage section (60) in an anoxic state; and
dissolving the flocculants in the returned treated water in the storage section (60).

4. The separation method according to Claim 3, wherein
the acquiring includes acquiring oil field produced water produced with crude oil as the water to be treated, and
the discharging of the substances to be removed includes discharging the substances to be removed to a pipe line which transfers the crude oil.

5. The separation method according to claim 3 or 4, wherein
the removing of the oxygen makes gas pressure in the separation section (20) after the closed container (500) is supplied with the oil-field-associated gas higher than the gas pressure outside of the separation section (20).

6. The separation method according to any one of claims 3 to 5, wherein
the supplying of oil-field-associated gas includes supplying the oil-field-associated gas to the closed container (500) after pressurizing the oil-field-associated gas separated by the separator by using a pump (33).

## Patentansprüche

1. Trennvorrichtung, umfassend:
einen Trenner, angeordnet in einem Ölfeld, der zu behandelndes Wasser von Rohöl, das in einem Ölbohrloch produziert wird, trennt;
einen Aufnahmeabschnitt (10), der dazu ausgelegt ist, zu behandelndes Wasser aufzunehmen, das im Ölfeld produziertes Wasser enthält, das in Zusammenhang mit dem im Ölbohrloch produzierten Rohöl produziert wird, wobei der Aufnahmeabschnitt das zu behandelnde Wasser von dem Trenner aufnimmt;
einen Trennabschnitt (20), der dazu ausgelegt ist, Öl von dem zu behandelnden Wasser zu trennen, beinhaltend:
einen Speicherabschnitt (60), der dazu ausgelegt ist, Flockungsmittel zum Ausflocken des in dem zu behandelnden Wasser enthaltenen Öls zu speichern;
einen Ausflockungsabschnitt (70), der dazu ausgelegt ist, durch Zusammenrühren der Flockungsmittel, magnetischen Materialien und des zu behandelnden Wassers Aggregate zu bilden, die ausgeflocktes Öl enthalten;
einen Sammelabschnitt (80), der dazu ausgelegt ist, die Aggregate zu sammeln und durch einen Kollektor mit Magnetismus an den Ausstoßabschnitt für die zu entfernende Substanz zu senden; und
wobei der Trennabschnitt (20) einen Rückführabschnitt (90) beinhaltet,
der Rückführabschnitt (90) dazu ausgelegt ist, zumindest einen Teil des behandelten Wassers zu dem Speicherabschnitt (60) in einem anoxischen Zustand zurückzuführen, wobei
der Speicherabschnitt (60) dazu ausgelegt ist, die Flockungsmittel in dem behandelten Wasser, das durch den Rückführabschnitt (90) zurückgeführt wird, zu lösen,
ein geschlossener Behälter (500) dazu ausgelegt ist, zumindest den Trennabschnitt (20) in einem abgedichteten Zustand zu halten;
ein Sauerstoffentfernungsabschnitt (30) dazu ausgelegt ist, Sauerstoff in dem Trennabschnitt (20) zu entfernen, beinhaltend:
ein Zufuhrrohr (320), das mit dem Inneren des geschlossenen Behälters (500) in Verbindung steht und dem geschlossenen Behälter ein anoxisches ölfeldassoziiertes Gas zuführt, das in Zusammenhang mit dem in dem Ölbohrloch produzierten Rohöl produziert wird, wobei das Zufuhrrohr mit dem Trenner verbunden ist, sodass das anoxische ölfeld-assoziierte Gas von dem Trenner an den Trennabschnitt des geschlossenen Behälters zugeführt wird, und
ein Ablassrohr (310), das mit dem Inneren des geschlossenen Behälters (500) in Verbindung steht, wobei das Ablassrohr Sauerstoff in dem geschlossenen Behälter (500) ablässt;
einen Ausstoßabschnitt für die zu entfernende Substanz (40), der dazu ausgelegt ist, das von dem zu behandelnden Wasser getrennte Öl auszustoßen; und
einen Ausstoßabschnitt für das behandelte Wasser (50), der dazu ausgelegt ist, das verbleibende behandelte Wasser auszustoßen, nachdem das Öl von dem zu behandelnden Wasser getrennt ist.

2. Trennvorrichtung nach Anspruch 1, wobei
der Ausstoßabschnitt für die zu entfernende Substanz (40) dazu ausgelegt ist, die Aggregate zu einer Rohrleitung auszustoßen, die das Rohöl weiterleitet.

3. Trennverfahren, umfassend:
in einem Ölfeld, Trennen von zu behandelndem Wasser von dem in einem Ölbohrloch produzierten Rohöl, wobei das Wasser im Ölfeld produziertes Wasser enthält, das in Zusammenhang mit dem in dem Ölbohrloch produzierten Rohöl produziert wird;
über einen Aufnahmeabschnitt (10), Aufnehmen des zu behandelnden Wassers, das im Ölfeld produziertes Wasser enthält, das in Zusammenhang mit dem in dem Ölbohrloch produzierten Rohöl produziert wird, aus dem in einem Ölfeld angeordneten Trenner, der zu behandelndes Wasser von in einem Ölbohrloch produzierten Rohöl trennt;
Trennen von Öl aus dem zu behandelnden Wasser in einem Trennabschnitt (20), der durch einen geschlossenen Behälter (500) umschlossen ist, der zumindest den Trennabschnitt (20) in einem abgedichteten Zustand hält;
Entfernen von Sauerstoff aus dem Trennabschnitt, beinhaltend:
Zuführen von ölfeld-assoziiertem Gas, das in Zusammenhang mit dem in einem Ölbohrloch produzierten Rohöl produziert wird, durch das Zufuhrrohr (320), das mit dem Inneren des geschlossenen Behälters (500), der den Trennabschnitt (20) umschließt, in Verbindung steht; und
Ausstoßen des Sauerstoffs in dem geschlossenen Behälter (500) durch das Ablassrohr (310), das mit dem Inneren des geschlossenen Behälters (500) in Verbindung steht;
Ausstoßen des Öls, das von dem zu behandelnden Wasser getrennt ist; und
Ausstoßen des verbleibenden behandelten Wassers, nachdem das Öl von dem zu behandelnden Wasser getrennt ist;
wobei das Trennen Folgendes beinhaltet:
Speichern von Flockungsmittel zum Ausflocken des in dem zu behandelnden Wasser enthaltenen Öls;
Bilden von Aggregaten, die ausgeflocktes Öl enthalten, das durch Rühren der Flockungsmittel, magnetischen Materialien und des zu behandelnden Wassers ausflockt;
Sammeln der Aggregate durch einen Kollektor mit Magnetismus und Ausstoßen der Aggregate;
Zurückführen von zumindest einem Teil des zu behandelnden Wassers zu dem Speicherabschnitt (60) in einem anoxischen Zustand; und
Lösen der Flockungsmittel in dem zurückgeführten Wasser in dem Speicherabschnitt (60).

4. Trennverfahren nach Anspruch 3, wobei
der Aufnahmeabschnitt ein Aufnehmen von im Ölfeld produzierten Wasser, das mit Rohöl produziert ist, als das zu behandelnde Wasser beinhaltet, und
das Ausstoßen der zu entfernenden Substanzen ein Ausstoßen der zu entfernenden Substanzen zu einer Rohrleitung, die das Rohöl weiterleitet, beinhaltet.

5. Trennverfahren nach Anspruch 3 oder 4, wobei
das Entfernen des Sauerstoffs dafür sorgt, dass der Gasdruck in dem Trennabschnitt (20), nachdem das ölfeld-assoziierte Gas dem geschlossenen Behälter (500) zugeführt ist, höher als der Gasdruck außerhalb des Trennabschnitts (20) ist.

6. Trennverfahren nach einem der Ansprüche 3 bis 5, wobei
das Zuführen des ölfeld-assoziierten Gases ein Zuführen des ölfeld-assoziierten Gases zu dem geschlossenen Behälter (500) nach der Druckbeaufschlagung des ölfeld-assoziierten Gases, das durch den Trenner getrennt ist, durch Verwendung einer Pumpe (33) beinhaltet.

## Revendications

1. Appareil de séparation comprenant :
un séparateur disposé dans un champ pétrolifère, qui sépare l'eau à traiter du pétrole brut produit dans un puits de pétrole ;
une partie acquisition (10) configurée pour acquérir l'eau à traiter contenant l'eau produite en champ pétrolifère qui est produite associée au pétrole brut produit dans le puits de pétrole, la partie acquisition acquérant l'eau à traiter à partir du séparateur ;
une partie séparation (20) configurée pour séparer le pétrole de l'eau à traiter, comprenant :
une partie stockage (60) configurée pour stocker des floculants pour la floculation du pétrole contenu dans l'eau à traiter ;
une partie floculation (70) configurée pour former des agrégats contenant du pétrole floculé en agitant ensemble les floculants, des matériaux magnétiques et l'eau à traiter ;
une partie collecte (80) configurée pour collecter et envoyer les agrégats à la partie refoulement de substance-à-éliminer par un collecteur présentant un magnétisme ; et ladite partie séparation (20) comprenant une partie retour (90),
ladite partie retour (90) étant configurée pour retourner au moins une partie de l'eau traitée à la partie stockage (60) dans un état anoxique,
ladite partie de stockage (60) étant configurée pour dissoudre les floculants dans l'eau traitée retournée par la partie retour (90),
un conteneur fermé (500) étant configuré pour maintenir au moins la partie séparation (20) dans un état hermétiquement fermé ;
une partie d'élimination d'oxygène (30) configurée pour éliminer l'oxygène dans la partie séparation (20) comprenant :
un conduit d'approvisionnement (320) communiquant avec l'intérieur du conteneur fermé (500) et approvisionnant le conteneur fermé en gaz anoxique associé au champ pétrolifère qui est produit associé au pétrole brut produit dans le puits de pétrole, le conduit d'approvisionnement étant relié au séparateur de sorte que le gaz anoxique associé au champ pétrolifère soit approvisionné depuis le séparateur jusqu'à la partie séparation du conteneur fermé, et
un conduit d'évacuation (310) communiquant avec l'intérieur du conteneur fermé (500), le conduit d'évacuation évacuant l'oxygène dans le conteneur fermé (500) ;
une partie refoulement de substance-à-éliminer (40) étant configurée pour refouler le pétrole séparé de l'eau à traiter ; et
une partie refoulement d'eau traitée (50) étant configurée pour refouler l'eau traitée restant après que le pétrole est séparé de l'eau à traiter.

2. Appareil de séparation selon la revendication 1,
ladite partie de refoulement de substance-à-éliminer (40) étant configurée pour refouler les agrégats jusqu'à un conduit qui transfère le pétrole brut.

3. Procédé de séparation comprenant :
dans un champ pétrolifère, la séparation de l'eau à traiter du pétrole brut produit dans un puits de pétrole, l'eau contenant de l'eau produite en champ pétrolifère qui est produite associée à du pétrole brut produit dans le puits de pétrole ;
par l'intermédiaire d'une partie d'acquisition (10), l'acquisition de l'eau à traiter contenant de l'eau produite en champ pétrolifère qui est produite associée à du pétrole brut produit dans le puits de pétrole provenant du séparateur disposé dans un champ pétrolifère, qui sépare l'eau à traiter du pétrole brut produit dans un puits de pétrole ;
la séparation du pétrole de l'eau à traiter dans une partie séparation (20) enfermée dans un conteneur fermé (500) qui maintient au moins la partie séparation (20) dans un état de fermeture hermétique ;
l'élimination de l'oxygène de la partie séparation, comprenant :
l'approvisionnement en gaz associé au champ pétrolifère qui est produit associé au pétrole brut produit dans un puits de pétrole par le conduit d'approvisionnement (320) communiquant avec l'intérieur du conteneur fermé (500) renfermant la partie séparation (20); et
le refoulement de l'oxygène dans le conteneur fermé (500) par le conduit d'évacuation (310) communiquant avec l'intérieur du conteneur fermé (500) ;
le refoulement du pétrole séparé de l'eau à traiter ; et
le refoulement de l'eau traitée restante après que le pétrole est séparé de l'eau à traiter ;
ladite séparation comprenant :
le stockage des floculants pour la floculation du pétrole contenu dans l'eau à traiter ;
la formation des agrégats qui contiennent le pétrole floculé qui est floculé en remuant les floculants, des matériaux magnétiques et l'eau à traiter ;
la collecte des agrégats par un collecteur présentant un magnétisme et le refoulement des agrégats ;
le retour d'au moins une partie de l'eau traitée jusqu'à la partie stockage (60) dans un état anoxique ; et
la dissolution des floculants dans l'eau traitée retournée dans la partie stockage (60).

4. Procédé de séparation selon la revendication 3,
ladite acquisition comprenant l'acquisition d'eau produite en champ pétrolifère produite avec du pétrole brut en tant qu'eau à traiter, et
le refoulement des substances à éliminer comprenant le refoulement des substances à éliminer jusqu'à un conduit transférant le pétrole brut.

5. Procédé de séparation selon la revendication 3 ou 4,
ladite élimination de l'oxygène rendant la pression du gaz dans la partie séparation (20), après que le conteneur fermé (500) est approvisionné en gaz associé au champ pétrolifère, supérieure à la pression de gaz à l'extérieur de la partie séparation (20).

6. Procédé de séparation selon l'une quelconque des revendications 3 à 5,
ledit approvisionnement en gaz associé au champ pétrolifère comprenant l'approvisionnement en gaz associé au champ pétrolifère au conteneur fermé (500) après la mise sous pression du gaz associé au champ pétrolifère séparé par le séparateur à l'aide d'une pompe (33).
